# EUROPÄISCHE PATENTSCHRIFT

(11) **EP 1 557 491 B1**
(45) Veröffentlichungstag und Bekanntmachung des Hinweises auf die Patenterteilung: **26.08.2009**
(21) Anmeldenummer: 04029009.0
(22) Anmeldetag: 07.12.2004
(51) Int. Cl.: D21G 3/00

(54) **Klinge für eine Schabvorrichtung und Verfahren zum Herstellen einer derartigen Klinge**
Doctor knife and method for producing said knife
Racle et procédé de production d'une telle racle

(30) Priorität: 23.01.2004 DE 102004004500
(43) Veröffentlichungstag der Anmeldung: 27.07.2005
(73) Patentinhaber: Joh. Clouth GmbH & Co. KG, 42499 Hückeswagen (DE)
(72) Erfinder: Kochenrath, Peter, 42855 Remscheid (DE)
(74) Vertreter: Steimle, Josef

(56) Entgegenhaltungen:
- WO-A-00/15904
- DE-C1- 4 434 546
- US-A1- 2002 176 934
- US-A1- 2002 189 777

## Beschreibung

Die Erfindung betrifft eine Klinge für eine Schabvorrichtung für eine Walze oder einen Zylinder, insbesondere einer Papiermaschine, einer Druckmaschine, eines Kalanders oder dergleichen, wobei die Klinge zumindest aus einem Trägermaterial und wenigstens einem Füllmaterial besteht. Die Erfindung betrifft auch ein Verfahren zur Herstellung einer derartigen Klinge.

Schabvorrichtungen besitzen die Aufgabe, die Oberfläche einer Walze beziehungsweise eines Zylinders zu reinigen. Im Falle einer Papiermaschine bewirkt eine derartige Schabvorrichtung, dass die über die betreffende Walze der Papiermaschine geführte Papierbahn im Falle eines Bahnrisses sich nicht auf der Walze aufwickelt, sondern die Walze an der vorhergesehenen Stelle verlässt, um zum Beispiel in einen Auffangschacht zu gelangen. Diese Aufgabe muss die Schabvorrichtung mit 100-prozentiger Sicherheit gewährleisten, da es sonst zu erheblichen Störungen bei der Papierherstellung, und unter Umständen sogar zu einer Beschädigung der Papiermaschine kommen kann. Aus diesem Grunde muss die Klinge der Schabvorrichtung stets an der Mantelfläche der betreffenden Walze anliegen. Die Ebene der Klinge verläuft dabei unter einem flachen Winkel zu der Tangente der Berührungsmantellinie an der Walze.

Um eine zuverlässige Schabwirkung zu erzielen, muss die Klinge bestimmte Eigenschaften erfüllen. Zum einen muss sie über ihre gesamte Länge sicher an der Oberfläche der Walze anliegen, wofür es spezielle Halterungen gibt, die den erforderlichen Druck auf die Klingen ausüben (DE 195 08 298 A1). Außerdem müssen die Klingen so beschaffen sein, dass sie eine gewisse Standfestigkeit besitzen, das heißt nicht zu schnell verschleißen. Aus der WO-A-00 15 904 ist eine aus Kunststoff bestehende Klinge bekannt, wobei dem Kunststoff ein Füllmaterial zugesetzt worden ist. Zwar können durch Verwendung geeigneter Zuschlagsstoffe die Eigenschaften der Klinge wunschgemäß verändert werden, jedoch erhöhen die Zuschlagsstoffe den Herstellungspreis der Klinge.

Der Erfindung liegt daher die Aufgabe zugrunde, eine Klinge und/oder ein Verfahren zum Herstellen einer derartigen Klinge bereit zu stellen, die zum Einen die gewünschten Eigenschaften besitzt, die zum Anderen jedoch preiswerter hergestellt werden kann.

Diese Aufgabe wird bei einer Klinge der eingangs genannten Art erfindungsgemäß dadurch gelöst, dass das Füllmaterial graduell im Trägermaterial verteilt ist.

Bei der erfindungsgemäßen Klinge ist das Füllmaterial nicht gleichmäßig über den gesamten Querschnitt der Klinge verteilt, sondern dort konzentriert, wo die Eigenschaften des Füllmaterials benötigt werden. Soll durch das Füllmaterial der Reibkontakt der Klinge auf der Walze, beispielsweise einer Papiermaschine, verringert und der dadurch erzeugte Verschleiß gemindert werden, so empfiehlt es sich, dieses Füllmaterial im Bereich der Wate vorzusehen. Demgemäß ändert sich die graduelle Verteilung des Füllmaterials ausgehend von der Wate in Richtung auf das entfernt liegende Einspannende der Klinge. Dies bedeutet, dass im Bereich der Wate die Klinge die gewünschten, den Verschleiß mindernden Eigenschaften aufweist, die Herstellungskosten jedoch bedeutend geringer sind als bei herkömmlichen Klingen, da der Anteil an den benötigten Füllstoffen beziehungsweise an Füllmaterial wesentlich geringer ist als bei herkömmlichen Klingen, da lediglich ein kleiner Bereich der Klinge diesen Füllstoff aufweisen muss. Ein anderer Vorteil wird darin gesehen, dass der von der Wate abgewandte Bereich der Klinge mit einem anderen Füllmaterial versehen sein kann, mit dem zum Beispiel die Elastizität, die Druckfestigkeit oder dergleichen positiv beeinflusst wird.

Gemäß einem bevorzugten Ausführungsbeispiel nimmt die Menge an Füllstoff in Richtung der Wate zu. Dabei kann die Zunahme linear oder sprunghaft sein. Bei der sprunghaften Zunahme wird der Vorteil erzielt, dass die Klinge an der Wate und einem Bereich hinter der Wate die gleichen oder nahezu die gleichen Eigenschaften besitzt. Mit zunehmender Einsatzdauer zeigt diese Klinge keine oder nahezu keine sich verschlechternden Eigenschaften auf, so dass die Schabqualität dieser Klinge über einen langen Zeitraum gewährleistet ist.

Gemäß einem bevorzugten Ausführungsbeispiel nimmt die Menge an Füllstoff ab einem Bereich, der etwa 50% bis 25%, insbesondere 33%, der Gesamtbreite der Klinge von der Wate entfernt ist, in Richtung der Wate zu. Diese Klinge kann also so lange eingesetzt werden, bis der mit Füllstoff versetzte Bereich abgenutzt ist, ohne dass sich die Eigenschaften der Klinge wesentlich verändern.

Die eingangs genannte Aufgabe wird gemäß der Erfindung außerdem mit einem Verfahren gelöst, bei dem das Trägermaterial und das Füllmaterial in eine Form gespritzt werden.

Die Herstellung der erfindungsgemäßen Klinge erfolgt also im Wesentlichen durch Spritzgießen, wobei die Materialien, insbesondere das Trägermaterial, in spritzfähiger Form in die Spritzgussform eingebracht werden.

Dabei werden das Trägermaterial und das Füllmaterial erfindungsgemäß in eine drehbare Form gespritzt, wobei die Drehachse der Form parallel zur Wate verläuft und von dieser radial weiter entfernt ist, als das Einspannende und die Form nach dem Einfüllen in Drehrichtung versetzt wird. Durch das Drehen der Form wirken Fliehkräfte auf das Trägermaterial und das Füllmaterial, wodurch eine gewisse Trennung beziehungsweise Entmischung der Materialien erfolgt, wobei das Material mit höherem spezifischen Gewicht in Richtung der Wate gedrängt wird. Dadurch kann auf einfache Weise die Konzentration des Füllmaterials im Bereich der Wate erhöht werden, um dort der Klinge die gewünschten Eigenschaften zu verleihen.

Dabei können das Trägermaterial und das Füllmaterial vor dem Einspritzen miteinander vermischt werden, oder es kann zuerst das Füllmaterial und anschließend das Trägermaterial eingespritzt werden. Insbesondere werden Füllstoffe oder Füllmaterialien verwendet, deren spezifisches Gewicht höher ist, als das des Trägermaterials.

Bei einem anderen Ausführungsbeispiel des Verfahrens wird die Form mittels wenigstens zweier Spritzköpfe befüllt, wobei die Spritzköpfe über die Breite der Klinge verteilt angeordnet sind und im Bereich der Wate der Füllstoff oder Trägermaterial mit Füllstoff eingespritzt wird. Mittels dieser beiden Spritzköpfe kann der Füllstoff so zugegeben beziehungsweise eingespritzt werden, dass die Klinge über ihren Querschnitt eine graduelle Verteilung des Füllstoffmaterials aufweist.

Dabei wird die Klinge bei einem bevorzugten Ausführungsbeispiel im Durchlaufverfahren hergestellt, wobei die Durchlaufrichtung der Längsrichtung der Klinge entspricht. Diese Klingen weisen über ihre gesamte Länge einen gleichbleibenden Eigenschaftsgradienten auf, was insbesondere bei Papiermaschinen mit großen Bahnbreiten von Vorteil ist, da dort die Schabvorrichtung nicht mehr mit einer Vielzahl kurzer Klingen bestückt werden muss, sondern nunmehr eine einzige Klinge verwendet werden kann. Diese Klinge nutzt sich aber nunmehr über ihre gesamte Länge gleichmäßig ab.

Mit Vorzug wird die Gießform vom Einspannende in Richtung der Wate befüllt. Dadurch wird sichergestellt, dass das zuerst eingefüllte Material auf jeden Fall im Bereich der Wate zu liegen kommt und die Klinge im Bereich ihres Einspannendes gefahrlos auf die gewünschte Breite zurechtgeschnitten werden kann, ohne dass Füllstoff aufweisendes Material entfernt wird.

Erfindungsgemäß wird für das Befüllen der Form ein Mischkopf, insbesondere mit mehreren Ventilen verwendet. Derartige Mischköpfe, mit denen unterschiedliche Materialien verarbeitbar sind, sind bekannt und können exakt angesteuert werden, so dass der schichtweise Aufbau der Klinge gewährleistet ist.

Bei einem Ausführungsbeispiel wird der Mischkopf in Längsrichtung der Form verfahren, wohingegen bei einem anderen Ausführungsbeispiel für das Befüllen der Form mehrere auf unterschiedlicher Höhe angeordnete Spritzdüsen vorgesehen sind, wobei die Form bezüglich der Spritzdüsen verfahren wird. Insbesondere wird ein niedrig viskoses Trägermaterial verwendet, in welchem sich das Füllmaterial relativ leicht bewegen kann.

Weitere Vorteile, Merkmale und Einzelheiten der Erfindung ergeben sich aus der nachfolgenden Beschreibung, in der unter Bezugnahme auf die Zeichnung besonders bevorzugte Ausführungsbeispiele im Einzelnen beschrieben sind. Dabei können die in der Zeichnung dargestellten und in der Beschreibung sowie in den Ansprüchen erwähnten Merkmale jeweils einzeln für sich oder in beliebiger Kombination erfindungswesentlich sein.

In der Zeichnung zeigen:
- Figur 1: eine schematische Ansicht einer Schabvorrichtung mit eingespannter Klinge;
- Figur 2: eine perspektivische schematische Darstellung einer ersten Spritzgussform;
- Figur 3: eine schematische Darstellung einer zweiten Spritzgussform;
- Figur 4: eine schematische Darstellung einer dritten Spritzgussform; und
- Figur 5: eine schematische Darstellung für die Herstellung einer Klinge im Durchlaufverfahren.

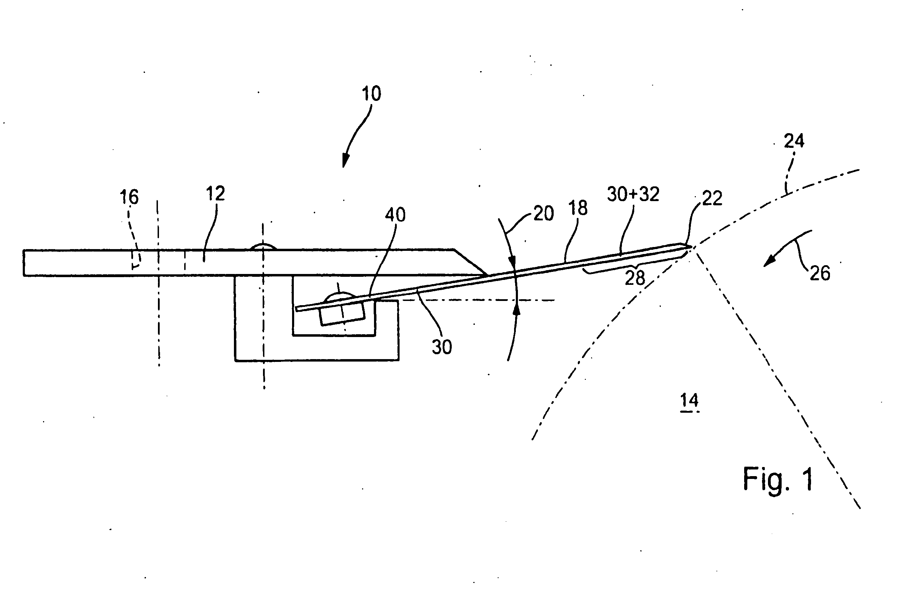

In der Figur 1 ist mit dem Bezugszeichen 10 eine Schabvorrichtung bezeichnet, die einen Klingenhalter 12 aufweist, der an geeigneter Stelle in unmittelbarer Nachbarschaft zu einer Walze 14 an einem Gestell der Walze 14 festgeschraubt werden kann. Hierfür weist der Klingenhalter 12 eine Bohrung 16 auf. In den Klingenhalter 12 ist eine Klinge 18 eingesetzt, die mit einem Winkel 20 zur Ebene des Klingenhalter 12 angestellt ist. Die Wate 22 der Klinge 18 liegt am Umfang 24 der Walze 14, die in Richtung des Pfeils 26 umläuft, an. Um den Verschleiß der Klinge 18 in Grenzen zu halten, weist die Klinge 18 im Bereich 28 der Wate 22 andere Eigenschaften auf, als im übrigen Bereich. Dies wird dadurch erzielt, dass der Klinge 18 ein geeignetes Füllmaterial 32 im Bereich 28 zugesetzt wurde. Mit diesem Füllmaterial 32 wird z.B. die Abriebfestigkeit erhöht und die Reibung gegenüber der Walze 18 vermindert. Im Allgemeinen besteht die Klinge 18 aus einem Trägermaterial 30, dem zur Erzielung dieser besonderen Eigenschaften das Füllmaterial 32 zugesetzt wurde.

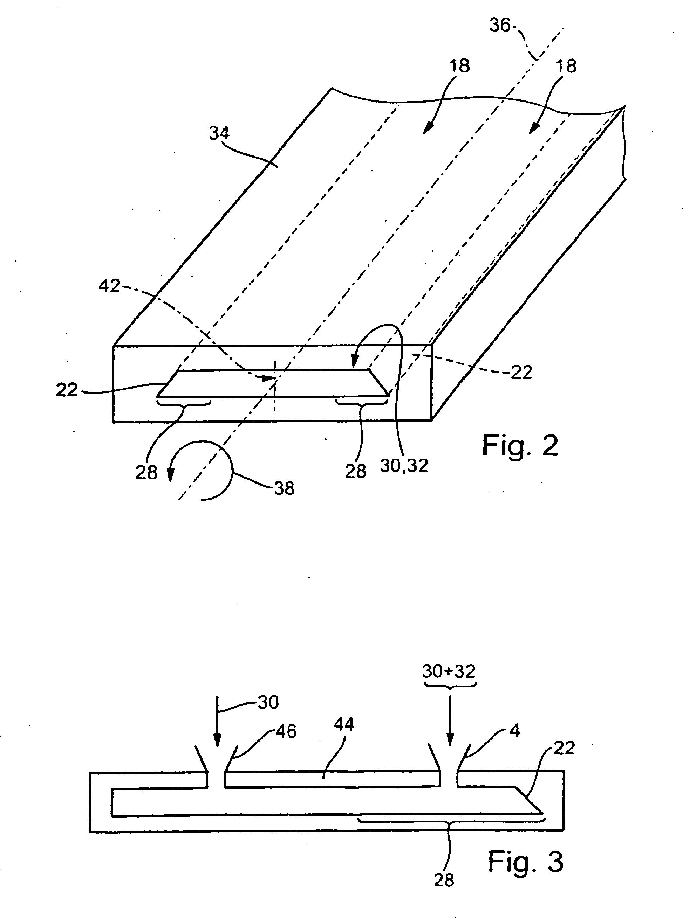

Die Figur 2 zeigt eine insgesamt mit 34 bezeichnete Spritzgussform, in welche das Trägermaterial 30 und das Füllmaterial 32 unter Druck oder drucklos eingefüllt werden kann. Dabei können das Trägermaterial 30 und das Füllmaterial 32 als Mischung eingefüllt werden, wohingegen auch die Möglichkeit besteht, dass die Materialien 30 und 32 getrennt, insbesondere nacheinander eingefüllt werden. Nach dem Befüllen der Spritzgussform 34 wird diese um eine Drehachse 36 gedreht, was mit dem Pfeil 38 angedeutet ist. Dadurch wird eine zumindest teilweise Entmischung der Materialien 30 und 32 erzwungen, so dass sich das Material mit dem höheren spezifischen Gewicht, nämlich das Füllmaterial 32, im Bereich 28 der Wate 22 aufkonzentriert. Auf diese Weise wird eine Klinge 18 mit graduellen Eigenschaften erzeugt, die zum Beispiel im,Bereich 28 der Wate 22 eine besonders hohe Verschleißfestigkeit besitzt und im übrigen Bereich, insbesondere im Bereich des Einspannendes 40, einen hohen Elastizitätskoeffizienten aufweist, wodurch die Bruchneigung verringert wird. Nach dem Aushärten der Materialien 30 und 32 in der Spritzgussform 34 werden durch einen zentralen Längsschnitt 42, der in der Figur 2 andeutungsweise dargestellt ist, zwei Klingen 18 erzeugt.

Die Figur 3 zeigt eine zweite Ausführungsform einer Spritzgussform 44, in welche an getrennten Stellen das Trägermaterial 30 und eine Mischung aus Trägermaterial 30 und Füllmaterial 32 über entsprechende Einfüllöffnungen 46 eingefüllt werden. Dadurch kann ebenfalls eine Aufkonzentrierung der Füllstoffe im Bereich 28 der Wate 22 bewirkt werden.

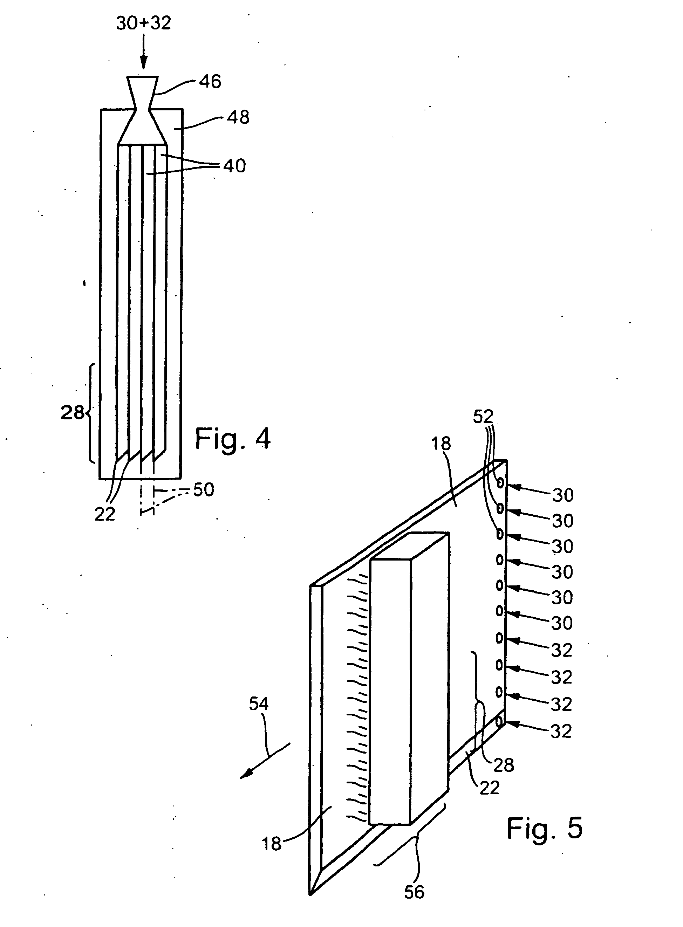

In der Figur 4 ist eine dritte Ausführungsform einer Spritzgussform 48 dargestellt, in deren Einfüllöffnung 46, die im Bereich der Einspannenden 40 der Klingen 18 vorgesehen ist, das Trägermaterial 30 und das Füllmaterial 32 eingefüllt werden. Dabei wird zuerst das Füllmaterial 32 oder eine Mischung aus Trägermaterial 30 und Füllmaterial 32 eingefüllt, bis der in die Wate 22 mündende Bereich 28 angefüllt ist, und anschließend wird der Rest der Spritzgussform 44 mit Trägermaterial 30 befüllt. Nach dem Aushärten werden die Klingen 18 durch Trennschritte 50 erzeugt. Die Spritzgussform 48 kann aber auch so ausgestaltet sein, dass einzelne Klingen 18 hergestellt werden können. Außerdem können die Materialien 30 und 32 mittels eines Mischkopfes eingefüllt werden.

Die Figur 5 zeigt ein Verfahren zur Herstellung einer Endlosklinge 18 im Durchlaufverfahren, wobei über eine Vielzahl von Spritzdüsen 52 das Trägermaterial 30 und das Füllmaterial 32 eingespritzt werden. Dabei wird das Füllmaterial 32 vornehmlich im Bereich 28 der Wate 22 zugeführt. Durch Vorschub in Richtung des Pfeils 54 gelangen die Materialien 30 und 32 in eine Heizzone 56, wo sie durch ein Heizelement 58 erwärmt werden, so dass die Materialien 30 und 32 aushärten. Die fertig gestellte Klinge 18 kann dann auf die gewünschte Länge abgelängt werden.

Es kann also festgehalten werden, dass die Klinge 18 im Bereich 28 der Wate 22 mit Füllstoffen aufkonzentriert ist, so dass sie dort andere Eigenschaften besitzt, als im übrigen Bereich.

## Patentansprüche

1. Klinge (18) für eine Schabvorrichtung (10) für eine Walze (14) oder einen Zylinder, insbesondere einer Papiermaschine, einer Druckmaschine, eines Kalanders oder dergleichen, wobei die Klinge (18) zumindest aus einem Trägermaterial (30) und wenigstens einem Füllmaterial (32) besteht, **dadurch gekennzeichnet, dass** das Füllmaterial (32) graduell im Trägermaterial (30) verteilt ist.

2. Klinge nach Anspruch 1, **dadurch gekennzeichnet, dass** die graduelle Verteilung des Füllmaterials (32) ausgehend von der Wate (22) in Richtung auf das entfernt liegende Einspannende (40) der Klinge (18) sich ändert.

3. Klinge nach einem der vorhergehenden Ansprüche, **dadurch gekennzeichnet, dass** die Menge an Füllstoff (32) in Richtung der Wate (22) zunimmt.

4. Klinge nach Anspruch 3, **dadurch gekennzeichnet, dass** die Menge an Füllstoff (32) linear zunimmt.

5. Klinge nach Anspruch 3, **dadurch gekennzeichnet, dass** die Menge an Füllstoff (32) ab einem Bereich (28) in Richtung der Wate (22) zunimmt, der etwa 50% bis 25%, insbesondere 33%, der Gesamtbreite der Klinge (18) von der Wate (22) entfernt ist.

6. Verfahren zum Herstellen einer Klinge (18) nach einem der vorhergehenden Ansprüche, **dadurch gekennzeichnet, dass** das Trägermaterial (30) und das Füllmaterial (32) in eine Form (34, 44, 48) gespritzt werden.

7. Verfahren nach Anspruch 6, **dadurch gekennzeichnet, dass** das Trägermaterial (30) und das Füllmaterial (32) in eine drehbare Form (34) gespritzt werden, wobei die Drehachse (36) der Form (34) parallel zur Wate (22) verläuft und von dieser radial weiter entfernt ist als das Einspannende (40) und die Form (34) nach dem Befüllen in Drehung versetzt wird.

8. Verfahren nach Anspruch 7, **dadurch gekennzeichnet, dass** das Trägermaterial (30) und das Füllmaterial (32) vor dem Einspritzen miteinander vermischt werden.

9. Verfahren nach Anspruch 7 oder 8, **dadurch gekennzeichnet, dass** Füllmaterialien (32) verwendet werden, deren spezifisches Gewicht höher ist als das des Trägermaterials (30).

10. Verfahren nach Anspruch 8, **dadurch gekennzeichnet, dass** mittels wenigstens zweier Spritzköpfe (52) die Form (44, 48) befüllt wird, wobei die Spritzköpfe (52) über die Breite der Klinge (18) verteilt angeordnet sind und im Bereich der Wate (22) der Füllstoff (32) oder Trägermaterial (30) mit Füllstoff (32) eingespritzt wird.

11. Verfahren nach Anspruch 10, **dadurch gekennzeichnet, dass** die Klinge (18) im Durchlaufverfahren hergestellt wird, wobei die Durchlaufrichtung (54) der Längsrichtung der Klinge (18) entspricht.

12. Verfahren nach Anspruch 6, **dadurch gekennzeichnet, dass** die Form (48) vom Einspannende (40) in Richtung der Wate (22) befüllt wird.

13. Verfahren nach Anspruch 12, **dadurch gekennzeichnet, dass** für das Befüllen der Form (48) ein Mischkopf verwendet wird.

14. Verfahren nach Anspruch 13, **dadurch gekennzeichnet, dass** der Mischkopf in Längsrichtung der Form verfahren wird.

15. Verfahren nach Anspruch 12, **dadurch gekennzeichnet, dass** für das Befüllen der Form mehrere auf unterschiedlicher Höhe angeordnete Spritzdüsen (52) vorgesehen sind.

16. Verfahren nach Anspruch 15, **dadurch gekennzeichnet, dass** die Form bezüglich der Spritzdüsen (52) verfahren wird.

17. Verfahren nach einem der Ansprüche 6 bis 16, **dadurch gekennzeichnet, dass** niedrig viskoses Trägermaterial (30) verwendet wird.

## Claims

1. A blade (18) for a scraping device (10) for a roller (14) or a cylinder, in particular of a paper making machine, a printing machine, of a calender, or the like, the blade (18) consisting at least of a carrier material (30) and at least of a filler (32), **characterized in that** said filler (32) is distributed in a graded manner in said carrier material (30).

2. The blade according to claim 1, **characterized in that** graded distribution of said filler (32) changes from the facet (22) towards the clamping end (40) of the blade (18).

3. The blade according to one of the preceding claims, **characterized in that** the amount of said filler (32) increases towards the facet (22).

4. The blade according to claim 3, **characterized in that** the amount of said filler (32) increases linearly.

5. The blade according to claim 3, **characterized in that** the amount of said filler (32) increases towards the facet (22) from a region (28) which has a separation from the facet (22) of approximately 50% to 25%, in particular 33%, of the overall width of the blade (18).

6. A method for producing the blade according to one of the preceding claims, **characterized in that** said carrier material (30) and said filler (32) are injected into a mold.

7. The method according to claim 6, **characterized in that** said carrier material (30) and said filler (32) are injection-molded into a rotatable mold (34), wherein an axis (36) of rotation of the mold (34) extends parallel to the facet (22) and has a larger radial separation therefrom than the clamping end (40), wherein the mold (34) is rotated after filling.

8. The method according to claim 7, **characterized in that** said carrier material (30) and said filler (32) are mixed before injection.

9. The method according to claim 7 or 8, **characterized in that** fillers (32) are used which have a higher specific weight than of said carrier material (30).

10. The method according to claim 8, **characterized in that** the mold (44, 48) is filled using at least two injection heads (52), wherein the injection heads (52) are distributed over a width of the blade (18) and said filler (32) or said carrier material (30) with said filler (32) is/are injected proximate the facet (22).

11. The method of claim 10, **characterized in that** the blade (18) is produced through continuous production, wherein the direction of production passage (54) corresponds to the longitudinal direction of the blade (18).

12. The method of claim 6, **characterized in that** the mold (48) is filled from the clamping end (40) towards the facet (22).

13. The method of claim 12, **characterized in that** a mixing head is used for filling the mold (48).

14. The method of claim 13, **characterized in that** the mixing head is moved in the longitudinal direction of the mold.

15. The method of claim 12, **characterized in that** several injection nozzles (52) are provided at different levels for filling the mold.

16. The method of claim 15, **characterized in that** the mold is moved relative to the injection nozzles (52).

17. The method of one of claims 6 to 16, **characterized in that** carrier material (30) is used having a low viscosity.

## Revendications

1. Lame (18) destinée à un racleur (10) pour un rouleau (14) ou un cylindre, en particulier, une machine à papier, une imprimante, une calandre ou similaire, la lame (18) étant constituée d'au moins un matériau de support (30) et d'au moins un matériau de remplissage (32), **caractérisée en ce que** le matériau de remplissage (32) est réparti graduellement dans le matériau de support (30).

2. Lame selon la revendication 1, **caractérisée en ce que** la répartition graduelle du matériau de remplissage (32) se modifie partant du flanc (22) en direction de l'extrémité distante de fixation (40) de la lame (18).

3. Lame selon une des revendications précédentes, **caractérisée en ce que** la quantité de matériau de remplissage (32) augmente en direction du flanc (22).

4. Lame selon la revendication 3, **caractérisée en ce que** la quantité de matériau de remplissage (32) augmente linéairement.

5. Lame selon la revendication 3, **caractérisée en ce que** la quantité de matériau de remplissage (32) augmente en direction du flanc (22) à partir d'une zone (28) qui est éloignée du flanc (22) d'environ 50 % à 25 %, en particulier de 30 %, de la largeur totale de la lame (18).

6. Procédé de fabrication d'une lame (18) selon une des revendications précédentes, **caractérisé en ce que** le matériau de support (30) et le matériau de remplissage (32) sont injectés dans un moule (34, 44, 48).

7. Procédé selon la revendication 6, **caractérisé en ce que** le matériau de support (30) et le matériau de remplissage (32) sont injectés dans un moule rotatif (34), l'axe de rotation (36) du moule (34) étant parallèle au flanc (22) et étant en sens radial plus éloigné de lui que l'extrémité de fixation (40), et le moule (34) étant mis en rotation après le remplissage.

8. Procédé selon la revendication 7, **caractérisé en ce que** le matériau de support (30) et le matériau de remplissage (32) sont mélangés l'un à l'autre avant l'injection.

9. Procédé selon la revendication 7 ou 8, **caractérisé en ce qu'**on utilise des matériaux de remplissage (32) dont le poids spécifique est supérieur à celui du matériau de support (30).

10. Procédé selon la revendication 8, **caractérisé en ce que** le moule (44, 48) est rempli au moyen d'au moins deux têtes d'injection (52), les têtes d'injection (52) étant disposées pour être réparties sur la largeur de la lame (18) et le matériau de remplissage (32) ou le matériau de support (30) contenant le matériau de remplissage (32) étant injecté dans la zone du flanc (22).

11. Procédé selon la revendication 10, **caractérisé en ce que** la lame (18) est fabriquée par un procédé en continu, le sens de passage (54) correspondant au sens de la longueur de la lame (18).

12. Procédé selon la revendication 6, **caractérisé en ce que** le moule (48) est rempli à partir de l'extrémité de fixation (40) en direction du flanc (22).

13. Procédé selon la revendication 12, **caractérisé en ce qu'**on utilise une tête de mélange pour le remplissage du moule (48).

14. Procédé selon la revendication 13, **caractérisé en ce que** la tête de mélange est déplacée dans le sens de la longueur du moule.

15. Procédé selon la revendication 12, **caractérisé en ce que** sont prévues pour le remplissage du moule une ou plusieurs buses (52) disposées à une hauteur différente.

16. Procédé selon la revendication 15, **caractérisé en ce que** le moule est déplacé par rapport aux buses (52).

17. Procédé selon une des revendications 6 à 16, **caractérisé en ce qu'**on utilise un matériau de support (30) de faible viscosité.
